(19) Europäisches Patentamt / European Patent Office / Office européen des brevets

(11) **EP 4 712 498 A1**

(12) **EUROPEAN PATENT APPLICATION**
published in accordance with Art. 153(4) EPC

(43) Date of publication:
**18.03.2026 Bulletin 2026/12**

(21) Application number: **23943351.9**

(22) Date of filing: **29.11.2023**

(51) International Patent Classification (IPC):
**H04N 23/63** (2023.01)　　**H04N 23/62** (2023.01)
**H04N 23/23** (2023.01)　　**H04N 23/84** (2023.01)

(86) International application number:
**PCT/CN2023/135093**

(87) International publication number:
**WO 2025/000875 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.06.2023 CN 202310760067**

(71) Applicant: **Iray Technology Co., Ltd.
Yantai, Shandong 264006 (CN)**

(72) Inventor: **YU, Shengnan
Yantai, Shandong 264006 (CN)**

(74) Representative: **Reiser & Partner
Patentanwälte mbB
Weinheimer Straße 102
69469 Weinheim (DE)**

(54) **PSEUDO-COLOR IMPLEMENTATION METHOD, INFRARED THERMAL IMAGING DEVICE AND STORAGE MEDIUM**

(57) The embodiments of the application provide a pseudo-color implementation method, an infrared thermal imaging device and a storage medium. The pseudo-color implementation method includes: acquiring display setting information of to-be-selected thumbnail windows in a pseudo-color selection interface, wherein the display setting information includes the number and arrangement of the to-be-selected thumbnail windows; determining, according to the display setting information, a coordinate mapping relationship and pseudo-color palette attributes, which correspond to positions of the to-be-selected thumbnail windows in the pseudo-color selection interface; acquiring real-time image data; and respectively displaying the real-time image data in the to-be-selected thumbnail windows according to the coordinate mapping relationship, and respectively presenting corresponding pseudo-color effects on the real-time image data in the to-be-selected thumbnail windows according to the pseudo-color palette attributes.

FIG. 3

**Description**

**FIELD**

The application relates to the technical field of images, in particular to a pseudo-color implementation method, an infrared thermal imaging device and a computer-readable storage medium.

**BACKGROUND**

With the development of the infrared technology, infrared thermal imaging devices are widely applied to various industries. Traditional infrared thermal imaging devices generally present real-time images in monochrome, which cannot well satisfy the requirements of certain application scenarios. To enrich visual presentation, infrared thermal imaging devices, which can display in different colors by applying different color mappings to original data based on different pseudo-color palettes, are launched with the development of technology.

At present, according to an existing pseudo-color effect implementation method, regarding an infrared thermal imaging device, a plurality of preset effect pictures of a plurality of preset images in different pseudo colors are displayed in a pseudo-color selection interface, and users preview the plurality of effect pictures in the pseudo-color selection interface one-by-one, to select a certain effect picture with a pseudo-color effect, then to perform the same pseudo-color processing on an image currently acquired. However, by adopting such a pseudo-color implementation method, users can only select the pseudo-color effect based on the preset pseudo-color effect pictures of the plurality of preset images, thus what users see is not what they get for images currently acquired, and the users cannot determine which pseudo-color effect is more suitable for the current image. In addition, the presentation of each pseudo-color effect picture requires a piece of dependent image data, multiple pseudo-color effect pictures require corresponding multiple sets of the image data, so when the pseudo-color implementation method is applied to a video data which consists of a large number of rapidly switching image frames, the calculation amount will be too large, making it impossible to satisfy usage requirements of scenarios that change in real time.

**SUMMARY**

To solve the technical problems in the prior art, the application provides a pseudo-color implementation method, which effectively reduces the calculation amount and presents pseudo-color effects of scenarios that change in real time, thus to facilitate the selection of the pseudo-color effects for users. An infrared thermal imaging device and a computer-readable storage medium are simultaneously provided.

**Technical Solution**

A pseudo-color implementation method, comprising:

acquiring real-time image data; and

respectively displaying the real-time image data in the to-be-selected thumbnail windows in a pseudo-color selection interface according to coordinate mapping relationship, and respectively presenting corresponding pseudo-color effects on the real-time image data in the to-be-selected thumbnail windows according to corresponding pseudo-color palette attributes.

An infrared thermal imaging device, comprising a processor, a memory and an image sensor, wherein:

the image sensor is configured to acquire real-time image data and send the real-time image data to the processor, and the image sensor comprises an infrared sensor; and the memory stores a computer program, and the computer program, when executed by the processor, implements the pseudo-color implementation method according to any one of embodiments of present invention; and

the acquired real-time image data is real time infrared video data captured for a target scenario.

A computer-readable storage medium, storing a computer program, wherein the computer program, when executed by a processor, implements the pseudo-color implementation method according to any one of embodiments of present invention.

**Beneficial Effects**

According to the pseudo-color implementation method in the above embodiments, a coordinate mapping relationship and pseudo-color palette attributes, which correspond to the positions of the multiple of the to-be-selected thumbnail windows in the pseudo-color selection interface, are determined according to display setting information of the to-be-selected thumbnail windows in a pseudo-color selection interface, and the number and arrangement of the to-be-selected thumbnail windows. When a real-time image data corresponding to a scenario that changes in real time is acquired, the real-time image data is respectively displayed in the to-be-selected thumbnail windows according to the coordinate mapping relationship, and corresponding pseudo-color effects are respectively presented on the real-time image data in the to-be-selected thumbnail windows according to the pseudo-color palette attributes. In this way, by determining the coordinate mapping relationship corresponding to the positions of the to-be-selected thumbnail windows in the pseudo-color selection interface, the multiple of the to-be-selected thumbnail windows in the pseudo-color selection interface may share one piece of real-time image data, and the real-time image data may be displayed in the multiple to-be-selected thumbnail windows by the coordinate mapping. On one hand, pseudo-color effect pictures of the real-time image data are displayed in the pseudo-color selection interface, what users see is what they get, and the users may more visually and accurately determine and select a pseudo-color processing effect most suitable for the image data of the current scenario from the multiple to-be-selected thumbnail windows in the pseudo-color selection interface; on the other hand, the multiple to-be-selected thumbnail windows in the pseudo-color selection interface may respectively present corresponding pseudo-color effect pictures by sharing one piece of real-time image data due to the coordinate mapping, such that copy operations of the image data are greatly reduced, the calculation amount is effectively reduced, and the requirement for pseudo-color processing of video image data of the scenario that changes in real time is better satisfied.

In the above embodiments, the infrared thermal imaging device and the computer-readable storage medium belong to the same concept as the embodiments of the corresponding pseudo-color implementation method, thus having the same technical effects as embodiments of the corresponding pseudo-color implementation method, which will not be repeated here.

**BRIEF DESCRIPTION OF THE DRAWINGS**

FIG. 1 is a schematic diagram of an application scenario of a pseudo-color implementation method according to one embodiment.

FIG. 2 is a schematic diagram of an application scenario of a pseudo-color implementation method according to another embodiment.

FIG. 3 is a flowchart of the pseudo-color implementation method according to one embodiment.

FIG. 4 is a schematic diagram of determining a coordinate mapping relationship corresponding to positions of to-be-selected thumbnail windows in a pseudo-color selection interface based on an OpenGL rendering principle.

FIG. 5 is a schematic diagram of the pseudo-color selection interface according to one embodiment.

FIG. 6 is a schematic diagram of coordinate transformation performed by means of the coordinate mapping relationship according to one embodiment.

FIG. 7 is a schematic diagram of various arrangements of the to-be-selected thumbnail windows according to one embodiment.

FIG. 8 is a flowchart of the pseudo-color implementation method in an optional specific example.

FIG. 9 is a schematic structural diagram of a pseudo-color implementation device according to one embodiment.

FIG. 10 is a schematic structural diagram of an infrared thermal imaging device according to one embodiment.

**DESCRIPTION OF THE EMBODIMENTS**

The technical solutions of the invention are further expounded below in detail in conjunction with accompanying drawings and specific embodiments.

To better clarify the objectives, technical solutions and advantages of the application, the application is described in further detail below in conjunction with accompanying drawings. The embodiments described below should not be construed as limitations of the application. All other embodiments obtained by those ordinarily skilled in the art without creative labor should also fall within the protection scope of the application.

The expression of "some embodiments" involved in the following description describes all possible subsets of possible embodiments. It should be noted that "some embodiments" may be identical or different subsets of all possible embodiments and may be combined without conflicts.

The terms "first", "second" and "third" involved in the following description are merely used for distinguishing similar objects and do not indicate specific orders of these objects. It may be understood that specific sequences or precedence orders indicated by "first", "second" and "third" may be exchanged in permissible cases to allow the embodiments of the application described here may be implemented in other sequences illustrated or described here.

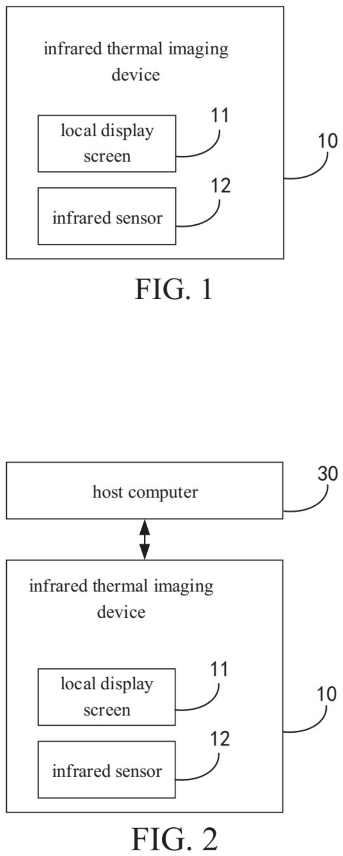

Referring to FIG. 1 which is a schematic diagram of an optional application scenario of a pseudo-color implementation method according to one embodiment of the application, the pseudo-color implementation method may be applied to an infrared thermal imaging device 10. The infrared thermal imaging device 10 can be a smart device with an infrared image data acquisition function and a storage and calculation ability, such as a thermal infrared imager, a handheld thermal imaging thermodetector or an infrared aiming device. The infrared thermal imaging device 10 can be loaded with a computer program for implementing the pseudo-color implementation method provided by the embodiments of the application, and displays, by means of a local display screen 11, infrared image data acquired by an infrared sensor 12 and various application interfaces, such as a pseudo-color selection interface for simultaneously checking various previewed pseudo-color effects in real time, or a configuration interface for configuring or modifying display setting information of the multiple to-be-selected thumbnail windows in the pseudo-color selection interface. Users, when photographing a target scenario, by means of the infrared thermal imaging device 10, may directly select a pseudo-color effect most suitable for an image of the current scenario, by browsing thumbnails presenting different pseudo-color effects of real-time image data in the pseudo-color selection interface. In the embodiments of the application, the infrared thermal imaging device 10 is a handheld infrared device, and the handheld infrared device not only has an infrared image data acquisition function, but also has a white-light image data acquisition and/or dim-light image data acquisition function. Thus, the real-time image data may be infrared image data, and may also be a fused image data of infrared image data and white-light, or a fused image data of infrared image data and dim-light and/or other light image data. In this embodiment, the real-time image data mainly refers to infrared image data or infrared video data.

Optionally, referring to FIG. 2, the infrared thermal imaging device 10 may be in communication connection with a host computer 30 and cooperate with the host computer 30, and the host computer 30 assists the infrared thermal imaging device 10 in processing data to implement the pseudo-color implementation method provided by the embodiments of the application. For example, a client program for implementing the pseudo-color implementation method provided by the embodiments of the application may be loaded in the host computer 30, and the host computer 30 executes the client program to provide the configuration interface for configuring or modifying the display setting information of the to-be-selected thumbnail window in the pseudo-color selection interface. Users may configure or modify the display setting information, such as the number and arrangement of the to-be-selected thumbnail window in the pseudo-color selection interface, at the host computer 30. The host computer 30 sends the display setting information to the infrared thermal imaging device 10, and the infrared thermal imaging device 10 displays thumbnails presenting different pseudo-color effects of the real-time image data in the pseudo-color selection interface, which is displayed by the local display screen 11 according to the display setting information configured by the users. Such that, the users, when photographing the target scenario by means of the infrared thermal imaging device 10, may directly select a pseudo-color effect most suitable for an image of the current scenario by browsing the thumbnails presenting different pseudo-color effects of the real-time image data in the pseudo-color selection interface.

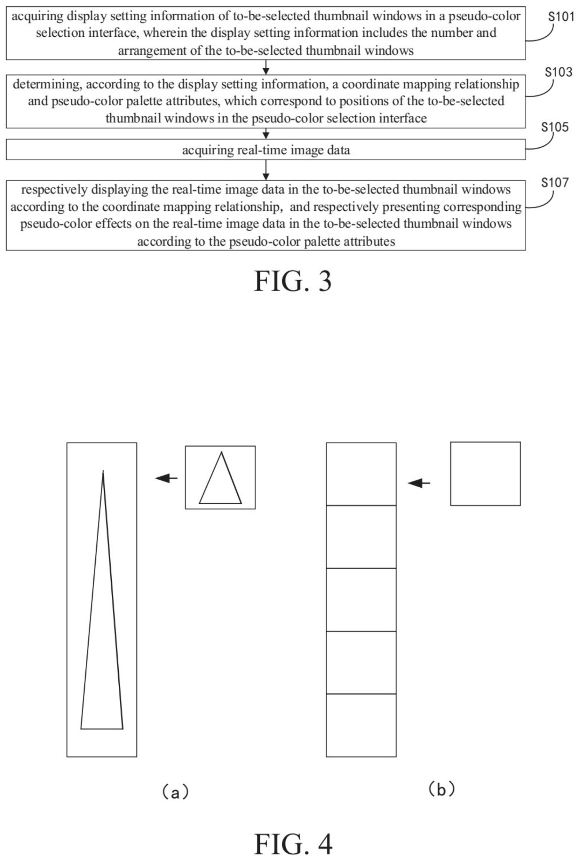

Referring to FIG. 3 which illustrates the pseudo-color implementation method according to another embodiment of the application, the pseudo-color implementation method may be applied to the infrared imaging device shown in FIG. 1 or FIG. 2. Wherein, the pseudo-color implementation method includes the following steps:

S101, acquiring display setting information of to-be-selected thumbnail windows in a pseudo-color selection interface, wherein the display setting information includes the number and arrangement of the to-be-selected thumbnail windows.

The pseudo-color selection interface, is an interface for displaying thumbnails presenting different pseudo-color effects respectively by means of multiple to-be-selected thumbnail windows to be selected by users. The pseudo-color selection interface may be a main interface, or a sub-interface entered when a set functional key on the main interface is triggered.

Pseudo-color refers to that the color of each pixel of an image is not directly determined by the value of each primitive color component, the pixels are actually taken as palettes or entry addresses of table entries in a Color Look-Up Table (CLUT), and intensity values of actual R, G and B may be looked out according to the addresses; if a color in the image does not exist in the palettes or the CLUT, the palette will use a closest color for matching, and colors generated based on the looked-out intensity values of R, G and B are not the true colors of the image and are thus called pseudo-colors, wherein the different palettes or the CLUT each can be regarded as one pseudo-color palette. Pseudo-color processing, is a technical process of converting a grayscale image or a multiband image into a color image by use of the pseudo-color palette, and aims to improve the recognizability of the image. Images with different pseudo-color effects, are images obtained by performing pseudo-color processing by means of different pseudo-color palettes.

The to-be-selected thumbnail windows, are windows for displaying images subjected to pseudo-color processing. In this embodiment, multiple to-be-selected thumbnail windows are configured in the pseudo-color selection interface, and different to-be-selected thumbnail windows correspondingly display thumbnail images presenting different pseudo-color effects. Wherein, the display setting information of the to-be-selected thumbnail windows in the pseudo-color selection interface may be a default initial value or may be set by users. The display setting information includes, but is not limited to, the number and arrangement of the to-be-selected thumbnail windows. Acquiring the display setting information of the to-be-selected thumbnail windows in the pseudo-color selection interface, may refer to acquiring the default initial value of the display setting information of the to-be-selected thumbnail windows in the pseudo-color selection interface, that is, users do not need to reset or modify the display setting information of the pseudo-color selection interface, and the to-be-selected thumbnail windows are displayed directly in the pseudo-color selection interface according to the initial default value when the users enter the pseudo-color selection interface; or, selected display setting information may be acquired according to a selection operation performed by users for the number and arrangement of the to-be-selected thumbnail windows, and when the users enter the pseudo-color selection interface, thus the to-be-selected thumbnail windows are displayed in the pseudo-color selection interface according to values selected by the users.

S103, determining, according to the display setting information, a coordinate mapping relationship and pseudo-color palette attributes, which correspond to positions of the to-be-selected thumbnail windows in the pseudo-color selection interface.

The number and arrangement of the to-be-selected thumbnail windows in the pseudo-color selection interface, have an influence on the size of each to-be-selected thumbnail window and the position of each to-be-selected thumbnail window in the pseudo-color selection interface. When users enter the pseudo-color selection interface, the positions of the to-be-selected thumbnail windows in the pseudo-color selection interface are determined according to current display setting information corresponding to the pseudo-color selection interface, and the coordinate mapping relationship corresponding to the positions of the to-be-selected thumbnail windows is obtained by coordinate transformation. Referring to FIG. 4, for example, in a case where the number of the to-be-selected thumbnail windows to be displayed in the pseudo-color selection interface is five, and the arrangement of the to-be-selected thumbnail windows is vertical, the coordinate mapping relationship (shown in b) corresponding to the positions of the five to-be-selected thumbnail windows in the pseudo-color selection interface is obtained by coordinate transformation based on the coordinate transformation principle of independent image display windows, for displaying image data, in the pseudo-color selection interface (shown in a). The pseudo-color palette attributes are type information for performing pseudo-color processing on the image data displayed in the to-be-selected thumbnail windows. The pseudo-color palette attributes, are in one-to-one correspondence with pseudo-color effects, and can be any pseudo-color palette information capable of uniquely characterizing the use of different pseudo-color effects. For example, the pseudo-color palette attributes may be serial numbers, names or codes of pseudo-color palettes of different pseudo-color effects.

The pseudo-color palette attributes corresponding to the to-be-selected thumbnail windows may be determined: by selecting, according to the number of the to-be-selected thumbnail windows to be displayed in the pseudo-color selection interface, the same number of pseudo-color palettes from a large number of pseudo-color palettes and associating the selected pseudo-color palettes with the to-be-selected thumbnail windows in one-to-one correspondence; or by selecting the same number of pseudo-color palettes as the to-be-selected thumbnail windows from a large number of pseudo-color palettes according to a certain sequence or rule and associating the selected pseudo-color palettes with the to-be-selected thumbnail windows in one-to-one correspondence; or, by selecting the same number of pseudo-color palettes as the to-be-selected thumbnail windows from a large number of pseudo-color palettes, with a pseudo-color palette selected by users as an initial pseudo-color palette and associating the selected pseudo-color palettes with the to-be-selected thumbnail windows in one-to-one correspondence.

S105: acquiring real-time image data.

The real-time image data, is image data, or video data, or video frame data extracted based on the video data, acquired in real time of the target scenario. The acquired real-time image data, may be a picture, or a video, or a video frame extracted according to the video, to be subjected to pseudo-color processing, which is acquired by real-time photographing, or a picture, or a video, or a video frame extracted according to the video, to be subjected to pseudo-color processing, acquired from other photographing devices by data communication. In this embodiment, the real-time image data is infrared video data, acquired by real-time photographing, of the target scenario.

S107, respectively displaying the real-time image data in the to-be-selected thumbnail windows according to the coordinate mapping relationship, and respectively presenting corresponding pseudo-color effects on the real-time image data in the to-be-selected thumbnail windows according to the pseudo-color palette attributes.

By determining the coordinate mapping relationship corresponding to the positions of the multiple to-be-selected thumbnail windows in the pseudo-color selection interface, the multiple to-be-selected thumbnail windows may respectively display the real-time image data, based on one piece of real-time image data, by coordinate transformation using the coordinate mapping relationship. Meanwhile, by determining the pseudo-color palette attributes corresponding to the multiple to-be-selected thumbnail windows, corresponding pseudo-color palettes are called respectively to perform pseudo-color processing on the real-time image data of each to-be-selected thumbnail windows, such that the multiple to-be-selected thumbnail windows respectively display the real-time image data with different pseudo-color effects according to the pseudo-color palette attributes. The multiple to-be-selected thumbnail windows in the pseudo-color selection interface respectively present different pseudo-color effects of the real-time image data, such that users may visually determine which one of the pseudo-color effects satisfies requirements to the maximum extent.

In the above embodiment, the display setting information of the to-be-selected thumbnail windows in the pseudo-color selection interface is acquired. The display setting information includes the number and arrangement of the to-be-selected thumbnail windows. The coordinate mapping relationship and the pseudo-color palette attributes, which correspond to the positions of the to-be-selected thumbnail windows in the pseudo-color selection interface, are determined according to and the number and arrangement of the to-be-selected thumbnail windows. By determining the coordinate mapping relationship corresponding to the positions of the to-be-selected thumbnail windows in the pseudo-color selection interface, the multiple to-be-selected thumbnail windows in the pseudo-color selection interface may share one piece of real-time image data and display the real-time image data by coordinate mapping. On one hand, multiple pseudo-color effect pictures of the real-time image data are displayed in the pseudo-color selection interface, what users see is what they get, and the users may more visually and accurately determine and select a pseudo-color processing effect most suitable for the image data of the current scenario from the multiple to-be-selected thumbnail windows in the pseudo-color selection interface. On the other hand, by coordinate mapping, the multiple to-be-selected thumbnail windows in the pseudo-color selection interface may present multiple pseudo-color effect pictures by sharing one piece of real-time image data, such that copy operations of the image data are greatly reduced, thus the calculation amount is effectively reduced, and the requirement for pseudo-color processing of video image data of a scenario that changes in real time is better satisfied.

In some embodiment, the pseudo-color implementation method further includes:

acquiring a selection instruction for the to-be-selected thumbnail windows in the pseudo-color selection interface, and determining a target pseudo-color palette attribute according to the selection instruction; and

displaying the real-time image data in a preview window, and presenting a corresponding pseudo-color effect on the real-time image data in the preview window according to the target pseudo-color palette attribute.

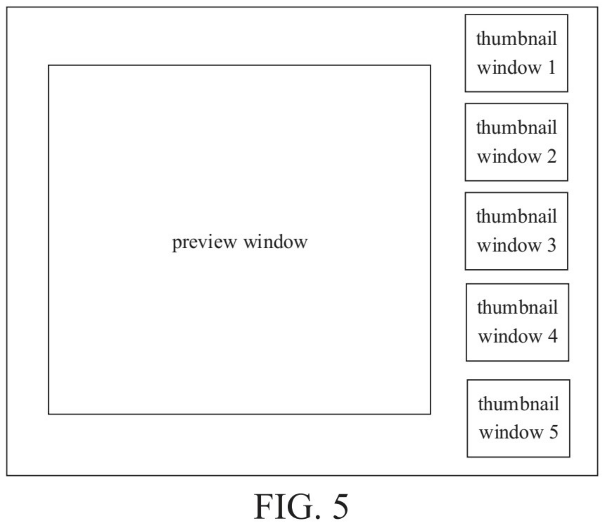

The preview window may be a preview interface located in a fixed region preset in the pseudo-color selection interface, and may also be a preview interface independent of the pseudo-color selection interface. As shown in FIG. 5 which is an optional schematic diagram of the preview window and the multiple to-be-selected thumbnail windows which are simultaneously displayed in the pseudo-color selection interface, a preview image displayed by the preview interface via a preview window is the real-time image data, and users select one of the to-be-selected thumbnail windows to acquire the pseudo-color palette attribute corresponding to the selected to-be-selected thumbnail window so as to call the corresponding pseudo-color palette to perform pseudo-color processing on the real-time image data, such that the preview window may display the pseudo-color effect obtained by performing pseudo-color processing on the real-time image data by means of the pseudo-color palette selected by the users.

Wherein, the to-be-selected thumbnail window generally display small-sized thumbnails, while the size of the preview window can be obviously greater than that of the to-be-selected thumbnail window, such that users may select a desired pseudo-color effect based on the thumbnails and then present the image with the desired pseudo-color effect in real time in the preview window. Users can observe the real-time image data with the desired pseudo-color effect, after pseudo-color processing, displayed in the preview window.

Optionally, the acquired real-time image data, may be refer to real-time data to be browsed currently or real-time image data to be previewed currently. In some embodiments, the step of acquiring real-time image data includes:

acquiring a preview instruction for currently captured image data, switching to the pseudo-color selection interface including the preview window and the to-be-selected thumbnail windows according to the preview instruction, and taking the currently captured image data as the real-time image data to be displayed; or

acquiring a preview instruction for a currently browsed image, switching to the pseudo-color selection interface including the preview window and the to-be-selected thumbnail windows according to the preview instruction, and taking the currently browsed image as the real-time image data to be displayed; or

displaying, in a preview mode, the pseudo-color selection interface including the preview window and the to-be-selected thumbnail windows, acquiring a selection instruction for uploading target image data, and taking the target image data as the real-time image data to be displayed according to the selection instruction.

The pseudo-color selection interface may be an interface called out according to a preview instruction for image data from users. For example, in a case where the user clocks "preview" in the real-time acquisition process of the image data to switch to the pseudo-color selection interface, which includes the preview window and the to-be-selected thumbnail windows, and the image data acquired in real time are taken as the real-time image data. Or, in a case where the user clicks "browse" in the image browsing process to switch to the pseudo-color selection interface, which includes the preview window and the to-be-selected thumbnail windows, and an image, that is browsed currently, is taken as the real-time image data. The pseudo-color selection interface may also be a main interface displayed when users enter the preview mode. In the preview mode, the users may select and upload image data to be browsed, and correspondingly, the selected and uploaded target image data is taken as the real-time image data. In this embodiment, according to the requirement of the users for previewing an image captured in real time or acquired image data, the to-be-selected thumbnail windows presenting multiple pseudo-color effects corresponding to the real-time image data to be previewed currently and the preview window are displayed in the same interface, such that the users may more visually and accurately determine and select a pseudo-color processing effect most suitable for the image data of the current scenario, from the multiple to-be-selected thumbnail windows in the pseudo-color selection interface.

Optionally, the pseudo-color implementation method further includes:

acquiring a scaling operation for a preview image in the preview window;

correspondingly upscaling or downscaling, if the scaling operation is a touch operation for a preset image scaling key, the preview image to a preset scale, based on the touch operation for the image scaling key; and/or

determining, if the scaling operation is a preset scaling gesture, a scaling factor according to a finger sliding distance of the preset scaling gesture, and correspondingly upscaling or downscaling the preview image according to the scaling factor.

The preview image displayed in the preview window may be scaled by users. In an optional example, the preset image scaling key may be displayed on the edge of the preview window, for example, "+" indicates a key for upscaling an image and "-" indicates a key for downscaling an image, and the user may click "+" or "-" to correspondingly upscale or downscale the preview image to a preset scale. In another optional example, users may slide in the preview window to input the preset scaling gesture, for example, sliding of the thumb and the index finger in opposite directions indicates upscaling, and sliding of the thumb and the index finger towards each other indicates downscaling, and the users may slide their fingers in the preview window to correspondingly control the preview image to be upscaled or downscaled.

Optionally, the pseudo-color implementation method further includes:
acquiring a partial upscaling instruction for the preview image in the preview window, determining a target portion according to the partial upscaling instruction and a current selected position, and correspondingly upscaling the target portion to a preset scale.

The preview image displayed in the preview window may be partially upscaled by users. In an optional example, the partial upscaling key may be displayed on the edge of the preview window, for example, a "magnifier" icon indicates partial upscaling of the image, and the users may click the "magnifier" icon and then click the target portion to be magnified, and then the target portion of the preview image is upscaled to a preset scale to be emphatically observed by the users.

Optionally, the pseudo-color implementation method further includes:

acquiring a translation operation for the preview image in the preview window;

translating, if the translation operation is a touch operation for a preset image translation key, the preview image according to a corresponding translation direction and distance, based on the touch operation for the preset image translation key; and/or

determining, if the translation operation is a preset translation gesture, a translation direction and distance according to a finger sliding direction and distance of the preset translation gesture, and correspondingly translating the preview image according to the translation direction and distance.

The preview image displayed in the preview window may be translated by users. In an optional example, the preset image translation key may be displayed on the edge of the preview window, for example, "T" indicates a key for upward translation of the image, "↓" indicates a key for downward translation of the image, "←" indicates the key for leftward translation of the image and "→" indicates a key for rightward translation of the image, and the users may click the corresponding key to control the preview image to be translated in the corresponding direction for a preset distance. In another optional example, the users may slide in the preview window to input a preset translation gesture, for example, the users may long press the image and then drag the image to correspondingly control the preview image to be translated with the drag operation.

In some embodiments, the step of determining, according to the display setting information, a coordinate mapping relationship and pseudo-color palette attributes, which correspond to positions of the to-be-selected thumbnail windows in the pseudo-color selection interface includes:

determining, according to the number and arrangement of the to-be-selected thumbnail windows to be displayed currently, the coordinate mapping relationship corresponding to the positions of the to-be-selected thumbnail windows in the pseudo-color selection interface based on an OpenGL rendering principle; and

determining, from a pseudo-color palette library, target pseudo-color palettes corresponding to the number of the to-be-selected thumbnail windows and sequentially determining the target pseudo-color palettes as the pseudo-color palette attributes corresponding to the to-be-selected thumbnail windows.

An Open Graphics Library (OpenGL) is a cross-language and cross-platform application programming interface (API) for rendering 2D and 3D vector graphics. The pseudo-color selection interface determines the coordinate mapping relationship corresponding to the positions of the to-be-selected thumbnail windows in the pseudo-color selection interface by viewport transformation of the OpenGL rendering principle according to the number and arrangement of the to-be-selected thumbnail windows to be displayed currently. Transformed coordinates are associated with pixels of the screen, and the same piece of real-time image data is projected to multiple to-be-selected thumbnail windows to be displayed synchronously. The pseudo-color palette library refers to a database including multiple pseudo-color palettes. Different pseudo-color palettes correspond to different pseudo-color effects. When the number and arrangement of the to-be-selected thumbnail windows to be displayed currently in the pseudo-color selection interface are determined and then users enter the pseudo-color selection interface, the pseudo-color palettes, the number of which is the same as the number of the to-be-selected thumbnail windows, are sequentially selected from the pseudo-color palette library according to the sort order of the pseudo-color palettes in the pseudo-color palette library. The pseudo-color palettes are taken as the pseudo-color palette attributes, corresponding to the to-be-selected thumbnail windows, one-by-one according to the arrangement of the to-be-selected thumbnail windows. For example, in a case where the number of the to-be-selected thumbnail windows is five and the arrangement of the to-be-selected thumbnail windows is vertical, the first, second, third, fourth and fifth pseudo-color palettes are selected from the pseudo-color palette library, and pseudo-color palette attributes corresponding to the first, second, third, fourth and fifth to-be-selected thumbnail windows are sequentially the first, second, third, fourth and fifth pseudo-color palettes.

The OpenGL has a large set of functions for operating models and pictures. In the OpenGL, specific functions are called respectively by means of a large number of graphics pipelines to gradually complete viewport transformation from the coordinates of a stereo image to the pixels in the screen and the image display windows, data in the graphics pipelines is processed in parallel by means of a program shader running on a GPU, such that the processing efficiency may be effectively improved. In this embodiment, the real-time image data is synchronously displayed in the multiple to-be-selected thumbnail windows in the pseudo-color selection interface based on the OpenGL rendering principle, such that the requirement for displaying thumbnails presenting different pseudo-color effects of the real-time image data in the pseudo-color selection interface is satisfied.

In some embodiments, the step of determining, from a pseudo-color palette library, target pseudo-color palettes corresponding to the number of the to-be-selected thumbnail windows, and sequentially determining the target pseudo-color palettes as the pseudo-color palette attributes corresponding to the to-be-selected thumbnail windows, includes:

acquiring, according to an initial order of pseudo-color palettes in the pseudo-color palette library, the target pseudo-color palettes corresponding to the number of the to-be-selected thumbnail windows; or, acquiring the target pseudo-color palettes corresponding to the number of the to-be-selected thumbnail windows according to a selection instruction for the pseudo-color palettes in the preset pseudo-color palette library; and

sequentially determining, according to the arrangement of the to-be-selected thumbnail windows, corresponding thumbnail serial numbers and sequentially determining the target pseudo-color palettes as the pseudo-color palette attributes corresponding to the thumbnail serial numbers.

The pseudo-color palette library generally includes multiple pseudo-color palettes. The pseudo-color selection interface may sequentially select multiple pseudo-color palettes, corresponding to the number of the multiple to-be-selected thumbnail windows to be displayed currently in the pseudo-color selection interface, as the target pseudo-color palettes according to an initial sort order of the pseudo-color palettes in the pseudo-color palette library. Optionally, the pseudo-color palette attributes corresponding to the multiple to-be-selected thumbnail windows may be manually selected from the pseudo-color palette library by users. The thumbnail serial numbers respectively corresponding to the to-be-selected thumbnail windows are determined according to the arrangement and sequence of the multiple to-be-selected thumbnail windows in the pseudo-color selection interface, and then, the target pseudo-color palettes are determined as the pseudo-color palette attributes corresponding to the thumbnail serial numbers (i.e., the pseudo-color palette attributes corresponding to the to-be-selected thumbnail windows).

In some embodiments, the pseudo-color palette library includes pseudo-color palette files in a picture format, and/or pseudo-color palette files in a document format recording a corresponding color mapping relationship for pseudo-color transformation; the pseudo-color implementation method further includes:

acquiring a local upgrade instruction for the pseudo-color palette files, receiving uploaded and updated pseudo-color palette files based on the local upgrade instruction, adding the updated pseudo-color palette files into the pseudo-color palette library to implement upgrading, or replacing the original pseudo-color palette files with the updated pseudo-color palette files to implement upgrading; and/or

acquiring an online upgrade instruction for the pseudo-color palette files, acquiring, from a cloud, updated pseudo-color palette files based on the online upgrade instruction, adding the updated pseudo-color palette files into the pseudo-color palette library to implement upgrading or replacing the original pseudo-color palette files with the updated pseudo-color palette files to implement upgrading.

The pseudo-color palette files may be files in the picture format. Optionally, each pseudo-color palette attribute may correspond to a picture including an palette image with one pseudo-color palette. or a picture may include multiple palette images each with one corresponding pseudo-color palette thus in whole corresponding to multiple pseudo-color palette attributes, and color information displayed by each palette image may indicate a color mapping relationship for performing pseudo-color processing on the image by the corresponding pseudo-color palette. The pseudo-color palette files may also be files in the document format. Optionally, the pseudo-color palette files are files in an excel format, files in an xml format, which record a color mapping relationship for performing pseudo-color processing on the image by means of different pseudo-color palettes. The pseudo-color palette library may be upgraded locally, for example, users may create and upload pseudo-color palette files by themselves, or users may modify existing pseudo-color palette files and then upload the modified pseudo-color palette files. The pseudo-color palette library may be upgraded online, for example, the pseudo-color palette library may be updated, maintained and upgraded by the manufacturer of the infrared thermal imaging device to satisfy personalized pseudo-color processing requirements in more application scenarios.

In some embodiments, the step of determining, according to the number and arrangement of the to-be-selected thumbnail windows to be displayed currently, the coordinate mapping relationship corresponding to the positions of the to-be-selected thumbnail windows in the pseudo-color selection interface based on an OpenGL rendering principle, includes: determining, according to the number and arrangement of the to-be-selected thumbnail windows to be displayed currently, a coordinate scaling factor and a coordinate translation quantity respectively corresponding to the positions of the to-be-selected thumbnail windows in the pseudo-color selection interface.

The coordinate mapping relation corresponding to the positions of the to-be-selected thumbnail windows in the pseudo-color selection interface mainly includes the coordinate scaling factor and the coordinate translation quantity. Wherein, the coordinate scaling factor is mainly related to the number of the to-be-selected thumbnail windows to be displayed in the pseudo-color selection interface, and the coordinate translation quantity is mainly related to the arrangement direction and sequence of the to-be-selected thumbnail windows. In this embodiment, the real-time image data is input to the pseudo-color selection interface by texture mapping based on the OpenGL rendering principle, and the pseudo-color selection interface maps the same piece of real-time image data into coordinates in a screen, formed by a specified number of pixels, in the to-be-selected thumbnail windows by scaling and translation, such that the multiple to-be-selected thumbnail windows respectively display pseudo-color thumbnails presenting different pseudo-color effects of the real-time image data by sharing the same piece of real-time image data.

Optionally, the step of respectively displaying the real-time image data in the to-be-selected thumbnail windows according to the coordinate mapping relationship and respectively presenting corresponding pseudo-color effects on the real-time image data in the to-be-selected thumbnail windows according to the pseudo-color palette attributes, includes:

calculating, according to the coordinate scaling factor and the coordinate translation quantity corresponding to the to-be-selected thumbnail windows, position coordinates of pixels in the to-be-selected thumbnail windows by coordinate transformation;

determining, based on the image data to be displayed currently, image data corresponding to the position coordinates of the pixels as pixel data by coordinate transformation; and

respectively performing, according to the pseudo-color palette attributes corresponding to the to-be-selected thumbnail windows, image processing on the image data of the pixels in the to-be-selected thumbnail windows by means of corresponding pseudo-color palettes, to obtain a real-time pseudo-color result for presenting the corresponding pseudo-color effects on the real-time image data in the to-be-selected thumbnail windows.

In this embodiment, by calculating the position coordinates of the pixels in the to-be-selected thumbnail windows by coordinate transformation, and determining image data of the position coordinates of the pixels as the pixel data by coordinate transformation, the real-time image data is displayed in the to-be-selected thumbnail windows.

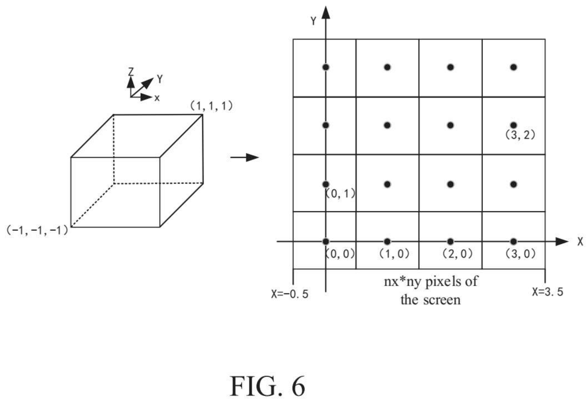

Referring to FIG. 6, for example, an object in a 3D scenario is represented in a normalized cube, and normalized coordinates (-1, 1) are mapped into coordinates in a screen formed by nx*ny pixels to project the normalized cube onto the screen by scaling and translation as follows:

scaling: the x-axis and the y-axis are upscaled from 2, 2 to nx, ny, and the scaling factor is nx/2, ny/2;

translation: the origin position remains unchanged after scaling, in this case, a point at the lower left corner needs to be moved to the origin of a screen coordinate system, and the moving distance of the x-axis and the moving distance of the y-axis in the positive direction are respectively nx/2-0.5 and ny/2-0.5, wherein 0.5 indicates that the origin of the screen coordinate system is a central point of the pixel at the lower left corner (one pixel is equivalent to a small rectangle).

A matrix for viewport transformation is expressed as:

$$\text{Mvp} = \begin{bmatrix} nx/2 & 0 & 0 & (nx-1)/2 \\ 0 & nx/2 & 0 & (nx-1)/2 \\ 0 & 0 & 1 & 0 \\ 0 & 0 & 0 & 1 \end{bmatrix}$$

In the above embodiment, by determining the coordinate scaling factor and the coordinate translation quantity respectively corresponding to the positions of the to-be-selected thumbnail windows in the pseudo-color selection interface, the same piece of real-time image data is projected into the multiple to-be-selected thumbnail windows by viewport transformation to be displayed synchronously.

In some embodiments, the display setting information further includes identity setting information set in identity regions corresponding to the to-be-selected thumbnail windows; the step of respectively displaying the real-time image data in the to-be-selected thumbnail windows according to the coordinate mapping relationship and respectively presenting corresponding pseudo-color effects on the real-time image data in the to-be-selected thumbnail windows according to the pseudo-color palette attributes, includes:

respectively performing, according to the pseudo-color palette attributes corresponding to the to-be-selected thumbnail windows, image processing on image data of pixels in the to-be-selected thumbnail windows by corresponding pseudo-color palettes, to obtain a real-time pseudo-color result for presenting the corresponding pseudo-color effects on the real-time image data in the to-be-selected thumbnail windows, and displaying pseudo-color type names of the corresponding pseudo-color palettes in the identity regions corresponding to the to-be-selected thumbnail windows.

In this embodiment, every two adjacent to-be-selected thumbnail windows in the pseudo-color selection interface are spaced apart from each other to form an identity region. By means of the identity regions, after pseudo-color processing is performed in the to-be-selected thumbnail windows by means of the corresponding pseudo-color palettes, the pseudo-color type names are further displayed in the identity regions of the to-be-selected thumbnail windows on the basis that thumbnails presenting corresponding pseudo-color effects are displayed in the corresponding to-be-selected thumbnail windows. Optionally, the display of the pseudo-color type names may be implemented by adding text icons, or by adding transparent layers in the to-be-selected thumbnail windows when pseudo-color processing is performed by means of the pseudo-color palettes. It should be noted that by means of the identity regions, the image displayed in the to-be-selected thumbnail windows will not be covered by the pseudo-color type names displayed. As another optional embodiment, every two of the multiple to-be-selected thumbnail windows in the pseudo-color selection interface are adjacent to each other, and the to-be-selected thumbnail windows only display pseudo-color thumbnails of the real-time image data and do not display the corresponding pseudo-color type names, or the corresponding pseudo-color type names are directly displayed in specified regions on the pseudo-color thumbnails.

In some embodiment, the step of determining, according to the number and arrangement of the to-be-selected thumbnail windows to be displayed currently, a coordinate scaling factor and a coordinate translation quantity respectively corresponding to the positions of the to-be-selected thumbnail windows in the pseudo-color selection interface, includes:

if the arrangement of the to-be-selected thumbnail windows is horizontal, determining, according to the number of the to-be-selected thumbnail windows, an x-coordinate scaling factor and an x-coordinate translation quantity respectively corresponding to the positions of the to-be-selected thumbnail windows in the pseudo-color selection interface; or

if the arrangement of the to-be-selected thumbnail windows is vertical, determining, according to the number of the to-be-selected thumbnail windows, a y-coordinate scaling factor and a y-coordinate translation quantity respectively corresponding to the positions of the to-be-selected thumbnail windows in the pseudo-color selection interface; or

if the arrangement of the to-be-selected thumbnail windows is gridded, determining, according to the number of rows and the number of columns of the to-be-selected thumbnail windows, an x-coordinate scaling factor, a y-coordinate scaling factor, an x-coordinate translation quantity and a y-coordinate translation quantity, which respectively correspond to the positions of the to-be-selected thumbnail windows in the pseudo-color selection interface.

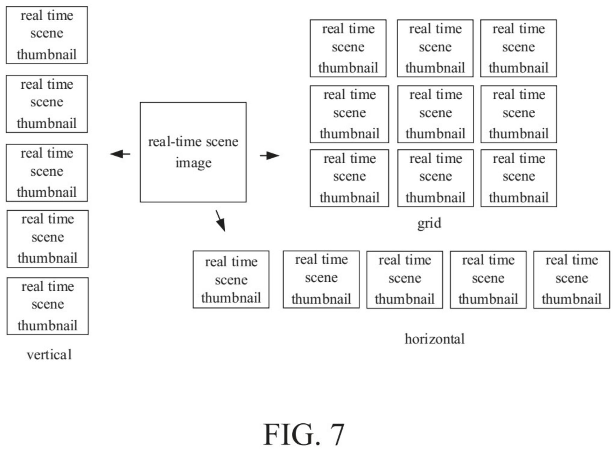

Referring to FIG. 7 which illustrates several common arrangements of the multiple to-be-selected thumbnail windows in the pseudo-color selection interface. Optionally, configuration items for users to select the arrangement of the to-be-selected thumbnail windows are provided in the pseudo-color selection interface or the configuration interface for configuring the display setting information of the pseudo-color selection interface. In a case where users do not select the arrangement of the to-be-selected thumbnail windows, one of the arrangements, such as a vertical arrangement, may be set as a default arrangement. When the coordinate scaling factor and the coordinate translation quantity corresponding to the positions of the to-be-selected thumbnail windows in the pseudo-color selection interface are determined, different calculation methods are adopted according to different arrangements of the to-be-selected thumbnail windows in the pseudo-color selection interface. In a case where the arrangement of the to-be-selected thumbnail windows is horizontal, the positions of the to-be-selected thumbnail windows in the pseudo-color selection interface may only involve scaling and translation in the x-coordinate direction. In a case where the arrangement of the to-be-selected thumbnail windows is vertical, the positions of the to-be-selected thumbnail windows in the pseudo-color selection interface may only involve scaling and translation in the x-coordinate direction. In a case where the arrangement of the to-be-selected thumbnail windows is gridded, the positions of the to-be-selected thumbnail windows in the pseudo-color selection interface may involve both scaling and translation in the x-coordinate direction and scaling and translation in the x-coordinate direction.

Optionally, the step of acquiring display setting information of to-be-selected thumbnail windows in a pseudo-color selection interface includes:

acquiring the display setting information of the to-be-selected thumbnail windows in the pseudo-color selection interface according to initial setup of the pseudo-color selection interface; and/or

acquiring the display setting information of the to-be-selected thumbnail windows in the pseudo-color selection interface based on a configuration operation for the number and arrangement of the to-be-selected thumbnail windows in the pseudo-color selection interface.

The number and arrangement of the to-be-selected thumbnail windows in the pseudo-color selection interface may be determined according to initial setup, that is, before entering the pseudo-color selection interface, users do not need to set attribute information such as the number and arrangement of the to-be-selected thumbnail windows in the pseudo-color selection interface. Optionally, before entering the pseudo-color selection interface or when opening the pseudo-color selection interface to view pseudo-color thumbnails of the real-time image data displayed in the to-be-selected thumbnail windows, users call out the configuration interface, used for setting the number and arrangement of the to-be-selected thumbnail windows so as to adjust the number, arrangement and other display information of the to-be-selected thumbnail windows in the pseudo-color selection interface.

In some embodiments, the pseudo-color implementation method further includes:

acquiring, according to a switching operation for the to-be-selected thumbnail windows in the pseudo-color selection interface, a switching instruction corresponding to the current switching operation;

selecting, according to the switching instruction, target pseudo-color palette attributes corresponding to the to-be-selected thumbnail windows with a pseudo-color palette switching requirement from currently optional pseudo-color palette attributes; and

performing image processing on the image data in the to-be-selected thumbnail windows by means of the target pseudo-color palette attributes to obtain a real-time pseudo-color result for presenting corresponding pseudo-color effects on the real-time image data in the to-be-selected thumbnail windows obtained after switching.

The switching operation for the to-be-selected thumbnail windows in the current pseudo-color selection interface may include many different operations, for example, an operation of sliding a designated region of the pseudo-color selection interface in a specified direction, an operation of moving one or more to-be-selected thumbnail windows, and an operation of clicking a key for controlling the to-be-selected thumbnail windows to move in a specified direction. Different switching operations may indicate different switching instructions, for example, an instruction for switching the pseudo-color thumbnail in one of the to-be-selected thumbnail windows, and an instruction for batch switching of the pseudo-color thumbnails displayed in the to-be-selected thumbnail windows in the current pseudo-color selection interface. The currently optional pseudo-color palette attributes may be pseudo-color palettes, which are located behind used pseudo-color palettes in the current pseudo-color selection interface, in the pseudo-color palette library. In the switching process of the pseudo-color thumbnails of the real-time image data displayed in the to-be-selected thumbnail windows in the pseudo-color selection interface, the real-time image data displayed in the to-be-selected thumbnail windows does not need to be switched, and only pseudo-color processing needs to be performed on the real-time image data in the to-be-selected thumbnail windows by means of the pseudo-color palettes, obtained after switching, according to the number of the pseudo-color palettes to be switched.

In some embodiments, the current switching operation is an operation for sliding m to-be-selected thumbnail windows in a specified direction, wherein m is less than or equal to the number of the optional pseudo-color palettes, and the number of the to-be-selected thumbnail windows in the pseudo-color selection interface is n; the step of selecting, according to the switching instruction, target pseudo-color palette attributes corresponding to the to-be-selected thumbnail windows with a pseudo-color palette switching requirement from currently optional pseudo-color palette attributes includes:

selecting m pseudo-color palette attributes from the currently optional pseudo-color palette attributes according to the switching instruction corresponding to the current switching operation;

if m is greater than or equal to n, sequentially replacing the target pseudo-color palette attributes corresponding to the to-be-selected thumbnail windows in the pseudo-color selection interface with the m pseudo-color palette attributes; or

if m is less than n, sequentially replacing the target pseudo-color palette attributes corresponding to the to-be-selected thumbnail windows in the pseudo-color selection interface with the pseudo-color palette attributes, corresponding to (n-m) to-be-selected thumbnail windows reserved in the current pseudo-color selection interface after the sliding operation and the m pseudo-color palette attributes.

Different sliding operations correspondingly indicate different numbers of windows to be switched. If the sliding operation indicates that the number of windows to be switched is greater than or equal to the total number of windows in the interface, the pseudo-color palette attributes in all the windows in the interface are switched. That is, the selected m pseudo-color palette attributes are arranged in sequence to update the target pseudo-color palette attributes respectively corresponding to the to-be-selected thumbnail windows in the pseudo-color selection interface. If the sliding operation indicates that the number of windows to be switched is less than the total number of the windows in the interface, the pseudo-color palette attributes corresponding to the windows, that are ranked behind in the interface, are moved upwards, and the m selected pseudo-color palette attributes are used as supplements. For example, the pseudo-color palette attributes corresponding to the to-be-selected thumbnail windows left after the to-be-selected thumbnail windows in the pseudo-color selection interface are moved forward by m windows in the sliding direction, and the m pseudo-color palette attributes are arranged in sequence to update the target pseudo-color palette attributes respectively corresponding to the to-be-selected thumbnail windows in the pseudo-color selection interface. Or, the pseudo-color palette attributes, left by subtracting the number m of windows to be switched from the sum of the pseudo-color palette attributes corresponding to all the windows in the current pseudo-color selection interface, and the m selected pseudo-color palette attributes are used to sequentially replace the pseudo-color palette attributes in the windows. All these operations may fulfil the effects of window sliding and batch switching of the pseudo-color palette attributes.

Optionally, the number of the optional pseudo-color palettes refers to the number of pseudo-color palettes currently optional in the current pseudo-color palette library. When users perform batch switching of pseudo-color palettes, the sliding distance in the specified direction is usually in a proportional relation with the number of pseudo-color palettes switched at a time, so when batch switching of the pseudo-color palettes is performed by a sliding operation, m is set to be less than or equal to the number of the pseudo-color palettes. If m is less than the number n of the to-be-selected thumbnail windows in the pseudo-color selection interface, m pseudo-color palettes, located behind currently used pseudo-color palettes, are sequentially selected from the pseudo-color palette library. The pseudo-color palette attributes corresponding to other to-be-selected thumbnail windows, that do not need to be switched, in the current pseudo-color selection interface are sequentially moved forward by m windows to be used as the target pseudo-color palette attributes corresponding to the remaining windows thereof, and the m pseudo-color palettes are used as the target pseudo-color palette attributes corresponding m to-be-selected thumbnail windows located behind, such that switching of m pseudo-color thumbnails is completed, and a sliding visual effect of pseudo-color thumbnails representing different pseudo-color effects in the multiple to-be-selected thumbnail windows is formed. If m is greater than or equal to the number n of the to-be-selected thumbnail windows in the pseudo-color selection interface, n pseudo-color palettes, located behind used pseudo-color palettes in the current pseudo-color selection interface, may be sequentially selected from the pseudo-color palette library and used as the target pseudo-color palette attributes corresponding to the n to-be-selected thumbnail windows in the pseudo-color selection interface, such that batch switching of the pseudo-color thumbnails displayed in all the to-be-selected thumbnail windows in the pseudo-color selection interface is completed.

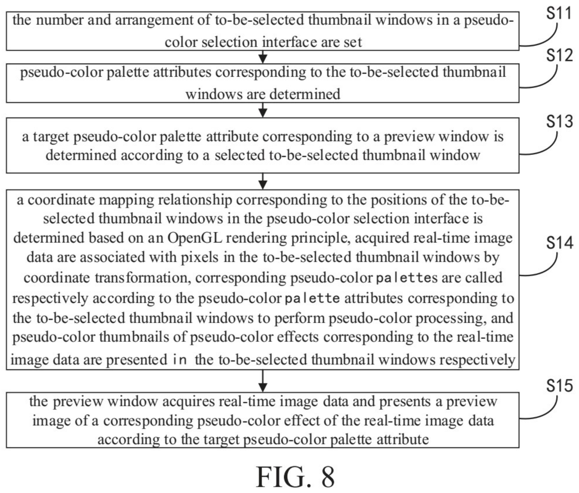

To gain a better understanding of the pseudo-color implementation method provided by the embodiments of the application, referring to FIG. 8, in an optional specific example where the pseudo-color implementation method is applied to an infrared thermal imaging device, the pseudo-color implementation method includes:

S11, the number and arrangement of to-be-selected thumbnail windows in a pseudo-color selection interface are set.

The to-be-selected thumbnail windows are in one-to-one correspondence with color palette thumbnails subjected to pseudo-color processing. The number of the color palette thumbnails may be specified by a program at the beginning or may be changed with requirements and determines the scaling factor of original image data in a color palette thumbnail display interface; the arrangement of the color palette thumbnails may be horizontal, vertical or gridded, and it determines the way of transformation of texture coordinates of the original image data in glsl (OpenGL Shader Language, OpenGL) files.

S12, pseudo-color palette attributes corresponding to the to-be-selected thumbnail windows are determined.

A pseudo-color palette library may be constructed in advance. The pseudo-color palette library may store a large number of pseudo-color palettes corresponding to different pseudo-color effects. These pseudo-color palettes are stored according to a certain rule, for example, the pseudo-color palettes are named with serial numbers and arranged and sorted in an ascending order of the serial numbers. The pseudo-color palette attribute includes identity information for uniquely representing the identity of the corresponding pseudo-color palette, such as the serial number, code or name of the corresponding pseudo-color palette. Related information of the pseudo-color palette attributes may be preset when the pseudo-color palettes are created or may be automatically generated according to a preset rule. The pseudo-color palettes may be in the form of textures. Only the same number of color palettes as the to-be-selected thumbnail windows in the pseudo-color selection interface may be imported into the pseudo-color palette library, or all color palettes may be imported into the pseudo-color palette library at a time. Optionally, a functional key for locally adding or online upgrading the color palettes may be provided by means of an application interface to allow users to access the network by means of the corresponding functional key. Latest color palette data is downloaded from the cloud to upgrade the pseudo-color palette library in real time, or to upgrade pseudo-color effects displayed in the to-be-selected thumbnail windows in the current pseudo-color selection interface. Users may import some color palette data stored locally by means of a corresponding functional key or create some color palette data by themselves, to upgrade the pseudo-color palette library in real time or to upgrade pseudo-color effects displayed in the to-be-selected thumbnail windows in the pseudo-color selection interface.

S13, a target pseudo-color palette attribute corresponding to a preview window is determined according to a selected to-be-selected thumbnail window.

Users may select, from the multiple to-be-selected thumbnail windows currently displayed in the pseudo-color selection interface, a pseudo-color effect to be browsed. The preview window takes the pseudo-color palette attribute corresponding to the selected to-be-selected thumbnail window as the target pseudo-color palette attribute and presents the corresponding pseudo-color effect according to the target pseudo-color palette attribute. In an optional specific example, users may click the position where the corresponding to-be-selected thumbnail window is located, attribute information, such as a serial number or id, of the clicked color palette thumbnail is calculated according to the position of the click in the color palette thumbnail display interface, and the attribute information may be transmitted to the preview interface to allow the preview interface to update specified color palette information, such that the color palette is selected by means of the thumbnail interface and specified by means of the preview interface to present the corresponding pseudo-color effect.

Wherein, when users select the pseudo-color effect from the pseudo-color selection interface, all the color palettes corresponding to the current to-be-selected thumbnail windows may be switched in baches. In one optional specific example, the switching operation performed by users on the color palettes may form a switching instruction based on increasing or decreasing of a specified serial number or sliding in a specified direction. The color palettes corresponding to the to-be-selected thumbnail windows in the current pseudo-color selection interface may be switched in batches upwards / downwards / leftwards / rightwards / forwards / backwards according to a specified serial number to realize an effect of batch switching of pseudo colors. Or, the color palettes corresponding to the to-be-selected thumbnail windows in the current pseudo-color selection interface may be switched in batches according to a sliding distance, a sliding direction or a touch position of fingers to realize an effect of batch switching of pseudo colors.

S14, a coordinate mapping relationship corresponding to the positions of the to-be-selected thumbnail windows in the pseudo-color selection interface is determined based on an OpenGL rendering principle, acquired real-time image data are associated with pixels in the to-be-selected thumbnail windows by coordinate transformation, corresponding pseudo-color palettes are called respectively according to the pseudo-color palette attributes corresponding to the to-be-selected thumbnail windows to perform pseudo-color processing, and pseudo-color thumbnails of pseudo-color effects corresponding to the real-time image data are presented in the to-be-selected thumbnail windows respectively.

Wherein, data is rendered, that is, the real-time image data may be a picture, a video steam that changes in real time, or a camera output stream that changes in real time. Rendering may be rendering of pseudo-color thumbnails with pseudo-color names or rendering of pseudo-color thumbnails without pseudo-color names. Based on the OpenGL rendering principle, multiple to-be-selected thumbnail windows in the pseudo-color selection interface may be designed to use one OpenGL interface, the real-time image data is input to the pseudo-color selection interface in the form of OES textures or sampler2D textures by texture mapping, all thumbnails in the pseudo-color selection interface share one piece of real-time image data by coordinate transformation, and corresponding color palettes are called according to the pseudo-color palette attributes corresponding to the to-be-selected thumbnail windows to realize pseudo-color effects corresponding to the thumbnails thereof.

S15, the preview window acquires real-time image data and presents a preview image of a corresponding pseudo-color effect of the real-time image data according to the target pseudo-color palette attribute.

When the preview window selects or switches the pseudo-color thumbnail corresponding to the pseudo-color effect to be previewed currently according to a real-time operation performed on the pseudo-color selection interface by users, the preview window links with the operation performed on the pseudo-color selection interface by the users to realize a real-time pseudo-color switching effect.

The pseudo-color implementation method provided by the above embodiments has at least the following features:

First, by calculating the coordinate mapping relationship, multiple to-be-selected thumbnail windows in the pseudo-color selection interface share the same piece of real-time image data by coordinate transformation. Different pseudo-color palettes are called according to a selection or switching operation of users to perform pseudo-color processing to present pseudo-color thumbnails of the real-time image data, such that the real-time pseudo-color efficiency will not be reduced with the increase in the number of pseudo-color palettes, and the requirement for a low-power real-time pseudo-color effect of real-time video steam data is satisfied. According to an existing pseudo-color thumbnail implementation method, each thumbnail uses a complete piece of original image data, such that when the number of pseudo-color palettes is large and the pseudo-color palettes need to be switched, resource consumption is high, and the requirement for real-time pseudo-color processing cannot be satisfied.

Second, display information such that the number and arrangement of the to-be-selected thumbnail windows in the pseudo-color selection interface may be set, and the pseudo-color thumbnail in the pseudo-color selection interface may be quickly switched in batches, such that operation is flexible, modularization is facilitated, and different requirements in different application scenarios may be satisfied.

Third, the to-be-selected thumbnail windows in the pseudo-color selection interface directly present different pseudo-color effects of real-time image data. What users see is what they get, such that the users may visually and accurately select a pseudo-color effect required by the current real-time scenario.

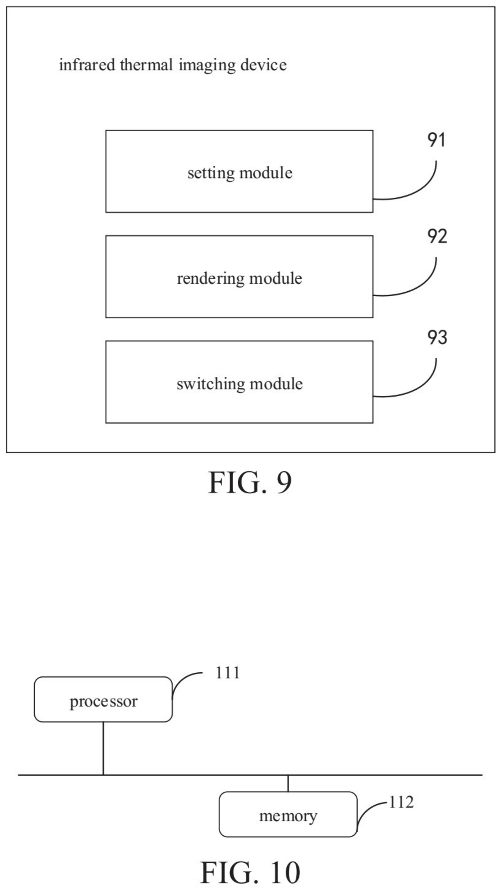

Referring to FIG. 9, in another aspect, the application provides a pseudo-color implementation device, including a setting module 91, configured to acquire display setting information of to-be-selected thumbnail windows in a pseudo-color selection interface, wherein the display setting information comprises the number and arrangement of the to-be-selected thumbnail windows; and a rendering module 92, configured to determine, according to the display setting information, a coordinate mapping relationship and pseudo-color palette attributes, which correspond to positions of the to-be-selected thumbnail windows in the pseudo-color selection interface; acquire real-time image data; and respectively display the real-time image data in the to-be-selected thumbnail windows according to the coordinate mapping relationship and respectively present corresponding pseudo-color effects on the real-time image data in the to-be-selected thumbnail windows according to the pseudo-color palette attributes.

Optionally, the pseudo-color implementation device further includes a switching module 93, configured to acquire a selection instruction for the to-be-selected thumbnail windows in the pseudo-color selection interface and determine a target pseudo-color palette attribute according to the selection instruction; and display the real-time image data in a preview window and present a corresponding pseudo-color effect on the real-time image data in the preview window according to the target pseudo-color palette attribute.

Optionally, the rendering module 92 is also configured to determine, according to the number and arrangement of the to-be-selected thumbnail windows to be displayed currently, the coordinate mapping relationship corresponding to the positions of the to-be-selected thumbnail windows in the pseudo-color selection interface based on an OpenGL rendering principle; and determine target pseudo-color palettes corresponding to the number of the to-be-selected thumbnail windows from a pseudo-color palette library and sequentially determine the target pseudo-color palettes as the pseudo-color palette attributes corresponding to the to-be-selected thumbnail windows.

Optionally, the rendering module 92 is also configured to acquire, according to an initial order of pseudo-color palettes in the pseudo-color palette library, the target pseudo-color palettes corresponding to the number of the to-be-selected thumbnail windows; or, acquire the target pseudo-color palettes corresponding to the number of the to-be-selected thumbnail windows according to a selection instruction for the pseudo-color palettes in the preset pseudo-color palette library; and sequentially determine, according to the arrangement of the to-be-selected thumbnail windows, corresponding thumbnail serial numbers and sequentially determine the target pseudo-color palettes as the pseudo-color palette attributes corresponding to the thumbnail serial numbers.

Optionally, the rendering module 92 is also configured to determine, according to the number and arrangement of the to-be-selected thumbnail windows to be displayed currently, a coordinate scaling factor and a coordinate translation quantity respectively corresponding to the positions of the to-be-selected thumbnail windows in the pseudo-color selection interface.

Optionally, the rendering module 92 is also configured to calculate, according to the coordinate scaling factor and the coordinate translation quantity corresponding to the to-be-selected thumbnail windows, position coordinates, obtained by coordinate transformation, of pixels in the to-be-selected thumbnail windows; determine, according to the image data to be displayed currently, image data corresponding to the position coordinates, obtained by coordinate transformation, of the pixels as pixel data; and respectively performing, according to the pseudo-color palette attributes corresponding to the to-be-selected thumbnail windows, image processing on the image data of the pixels in the to-be-selected thumbnail windows by means of corresponding pseudo-color palettes to obtain a real-time pseudo-color result for presenting the corresponding pseudo-color effects on the real-time image data in the to-be-selected thumbnail windows.

Optionally, the rendering module 92 is also configured to respectively perform, according to the pseudo-color palette attributes corresponding to the to-be-selected thumbnail windows, image processing on image data of pixels in the to-be-selected thumbnail windows by means of corresponding pseudo-color palettes to obtain a real-time pseudo-color result for presenting the corresponding pseudo-color effects on the real-time image data in the to-be-selected thumbnail windows and displaying pseudo-color type names of the corresponding pseudo-color palettes in the identity regions corresponding to the to-be-selected thumbnail windows.

Optionally, the rendering module 92 is also configured to determine, if the arrangement of the to-be-selected thumbnail windows is horizontal, an x-coordinate scaling factor and an x-coordinate translation quantity respectively corresponding to the positions of the to-be-selected thumbnail windows in the pseudo-color selection interface according to the number of the to-be-selected thumbnail windows; or determine, if the arrangement of the to-be-selected thumbnail windows is vertical, a y-coordinate scaling factor and a y-coordinate translation quantity respectively corresponding to the positions of the to-be-selected thumbnail windows in the pseudo-color selection interface according to the number of the to-be-selected thumbnail windows; or determine, if the arrangement of the to-be-selected thumbnail windows is gridded, an x-coordinate scaling factor, a y-coordinate scaling factor, an x-coordinate translation quantity and a y-coordinate translation quantity, which respectively correspond to the positions of the to-be-selected thumbnail windows in the pseudo-color selection interface according to the number of rows and the number of columns of the to-be-selected thumbnail windows.

Optionally, the setting module 91 is also configured to acquire the display setting information of the to-be-selected thumbnail windows in the pseudo-color selection interface according to initial setup of the pseudo-color selection interface; and/or acquire the display setting information of the to-be-selected thumbnail windows in the pseudo-color selection interface based on a configuration operation for the number and arrangement of the to-be-selected thumbnail windows in the pseudo-color selection interface.

Optionally, the switching module 93 is also configured to acquire, according to a switching operation for the to-be-selected thumbnail windows in the pseudo-color selection interface, a switching instruction corresponding to the current switching operation; select, according to the switching instruction, target pseudo-color palette attributes corresponding to the to-be-selected thumbnail windows with a pseudo-color palette switching requirement from currently optional pseudo-color palette attributes; and perform image processing on the image data in the to-be-selected thumbnail windows by means of the target pseudo-color palette attributes to obtain a real-time pseudo-color result for presenting corresponding pseudo-color effects on the real-time image data in the to-be-selected thumbnail windows obtained after switching.

Optionally, the switching module 93 is also configured to select m pseudo-color palette attributes from the currently optional pseudo-color palette attributes according to the switching instruction corresponding to the current switching operation; and if m is greater than or equal to the number of the to-be-selected thumbnail windows n in the pseudo-color selection interface, sequentially arrange the n pseudo-color palette attributes to update the n pseudo-color palette attributes to the target pseudo-color palette attributes corresponding to the to-be-selected thumbnail windows in the pseudo-color selection interface respectively; or, if m is less than the number of the to-be-selected thumbnail windows n in the pseudo-color selection interface, sequentially arrange the pseudo-color palette attributes corresponding to the to-be-selected thumbnail windows left after the to-be-selected thumbnail windows in the pseudo-color selection interface are moved forward by m windows in a sliding direction, and the m pseudo-color palette attributes to update the target pseudo-color palette attributes respectively corresponding to the to-be-selected thumbnail windows in the pseudo-color selection interface.

It should be noted that in the process of implementing the pseudo-color implementation method by the pseudo-color implementation device provided by the above embodiments, the division of the above program modules is merely illustrative, and in actual application, the processing may be allocated to different program modules to be completed as needed, that is, the internal structure of the device may be divided into different program modules to complete all or part of the steps of the method. In addition, the pseudo-color implementation device provided by the above embodiments and the corresponding pseudo-color implementation method belong to the same concept, and the specific implementation of the pseudo-color implementation device may be understood with reference to the embodiment of the method and will not be repeated here.

In another aspect, the application provides an infrared thermal imaging device. Referring to FIG. 10 which is an optional schematic hardware diagram of the infrared thermal imaging device according to an embodiment of the application, the infrared thermal imaging device includes a processor 111 and a memory 112 connected to the processor 111, wherein the memory 112 stores various types of data to support operations of the infrared thermal imaging device and also stores a computer program for implementing the pseudo-color implementation method according to any one of the embodiments of the application mentioned above. The computer program, when executed by the processor, performs the steps of the pseudo-color implementation method according to any one of the embodiments of the application and fulfils the same technical effects, which are not repeated here.

Wherein, the infrared thermal imaging device includes an image sensor connected to the processor 111. The image sensor is configured to acquire real-time image data and transmit the real-time image data to the processor. The processor includes a graphics processing unit (GPU) and is configured to perform parallel calculation on the coordinate mapping relationship of the to-be-selected thumbnail windows. Optionally, the image sensor is an infrared sensor. The real-time image data is infrared video data, captured in real time, of a target scenario. Wherein, thumbnails displayed in the to-be-selected thumbnail windows are respectively pseudo-color thumbnails corresponding to the infrared video data. The infrared thermal imaging device includes a display screen connected to the processor 111. Users may set display information of the pseudo-color selection interface, check and switch the pseudo-color thumbnails and perform other operations by means of an application interface displayed in the display screen.

The embodiments of the application further provide a computer-readable storage medium. The computer-readable storage medium stores a computer program, and the computer program, when executed by a processor, performs the processes in the embodiments of the image processing method and fulfills the same technical effects, which will not be repeated here. Wherein, the computer-readable storage medium may be, for example, a read-only memory (ROM), a random-access memory (RAM), a diskette or a compact disc.

It should be noted that the term "comprise" or "include" or any other variants in the specification are intended to indicate non-exclusive inclusion, such that a process, method, article or device comprising a series of elements not only includes the elements that are listed, but also includes other elements that are not clearly listed, or inherent elements of the process, method, article or device. Unless otherwise specifically stated, an element defined by "comprise ..." shall not exclude other identical elements in a process, method, article or device including the element.

With reference to the description of the above embodiments, those skilled in the art may clearly understand that the method in the above embodiment may be implemented by means of software and necessary hardware platforms or by hardware, and the former is preferred in many cases. Based on such an understanding, the technical solution of the invention or the part, making a contribution to the prior art, of the technical solution of the invention is essentially embodied in the form of a software product. The software product is stored in a storage medium (such as an ROM/RAM, a diskette or a compact disc) and includes a plurality of instructions to allow a terminal (such as a mobile phone, a computer, a server or a network device) to implement the method in the embodiments of the invention.

The above embodiments are merely specific ones of the invention, and the protection scope of the invention is not limited to the above embodiments. Transformations or substitutions easily obtained by any skilled in the art within the technical scope disclosed by the invention should also fall within the protection scope of the invention. The protection scope of the invention should be defined by the claims.

**Claims**

1. A pseudo-color implementation method, comprising:

acquiring display setting information of to-be-selected thumbnail windows in a pseudo-color selection interface, wherein the display setting information comprises the number and arrangement of the to-be-selected thumbnail windows;

determining, according to the display setting information, a coordinate mapping relationship and pseudo-color palette attributes, which correspond to positions of the to-be-selected thumbnail windows in the pseudo-color selection interface;

acquiring real-time image data; and

respectively displaying the real-time image data in the to-be-selected thumbnail windows in a pseudo-color selection interface according to the coordinate mapping relationship and respectively presenting corresponding pseudo-color effects on the real-time image data in the to-be-selected thumbnail windows according to the corresponding pseudo-color palette attributes.

2. The pseudo-color implementation method according to Claim 1, further comprising:

a step of acquiring a selection instruction for the to-be-selected thumbnail windows in the pseudo-color selection interface and determining a target pseudo-color palette attribute according to the selection instruction; and displaying the real-time image data in a preview window and presenting a corresponding pseudo-color effect on the real-time image data in the preview window according to the target pseudo-color palette attribute.

3. The pseudo-color implementation method according to Claim 2, further comprising:

acquiring a scaling operation for a preview image in the preview window;

correspondingly upscaling or downscaling, if the scaling operation is a touch operation for a preset image scaling key, the preview image to a preset scale, based on the touch operation for the image scaling key; and/or

determining, if the scaling operation is a preset scaling gesture, a scaling factor according to a finger sliding distance of the preset scaling gesture and correspondingly upscaling or downscaling the preview image according to the scaling factor.

4. The pseudo-color implementation method according to Claim 3, further comprising:
acquiring a partial upscaling instruction for the preview image in the preview window, determining a target portion according to the partial upscaling instruction and a current selected position and correspondingly upscaling the target portion to a preset scale.

5. The pseudo-color implementation method according to Claim 2, further comprising:

acquiring a translation operation for the preview image in the preview window;

translating, if the translation operation is a touch operation for a preset image translation key, the preview image according to a corresponding translation direction and distance, based on the touch operation for the preset image translation key; and/or

determining, if the translation operation is a preset translation gesture, a translation direction and distance according to a finger sliding direction and distance of the preset translation gesture and correspondingly translating the preview image according to the translation direction and distance.

6. The pseudo-color implementation method according to Claim 1, wherein the step of determining, according to the display setting information, a coordinate mapping relationship and pseudo-color palette attributes, which correspond to positions of the to-be-selected thumbnail windows in the pseudo-color selection interface comprises:

determining, according to the number and arrangement of the to-be-selected thumbnail windows to be displayed currently, the coordinate mapping relationship corresponding to the positions of the to-be-selected thumbnail windows in the pseudo-color selection interface based on an OpenGL rendering principle; and

determining, from a pseudo-color palette library, target pseudo-color palettes corresponding to the number of the to-be-selected thumbnail windows and sequentially determining the target pseudo-color palettes as the pseudo-color palette attributes corresponding to the to-be-selected thumbnail windows.

7. The pseudo-color implementation method according to Claim 6, wherein the step of determining, from a pseudo-color palette library, target pseudo-color palettes corresponding to the number of the to-be-selected thumbnail windows and sequentially determining the target pseudo-color palettes as the pseudo-color palette attributes corresponding to the to-be-selected thumbnail windows comprises:

acquiring, according to an initial order of pseudo-color palettes in the pseudo-color palette library, the target pseudo-color palettes corresponding to the number of the to-be-selected thumbnail windows; or, acquiring the target pseudo-color palettes corresponding to the number of the to-be-selected thumbnail windows according to a selection instruction for the pseudo-color palettes in the preset pseudo-color palette library; and

sequentially determining, according to the arrangement of the to-be-selected thumbnail windows, corresponding thumbnail serial numbers and sequentially determining the target pseudo-color palettes as the pseudo-color palette attributes corresponding to the thumbnail serial numbers.

8. The pseudo-color implementation method according to Claim 7, wherein the pseudo-color palette library comprises pseudo-color palette files in a picture format, and/or pseudo-color palette files in a document format recording a corresponding color mapping relationship for pseudo-color transformation; the pseudo-color implementation method further comprises:

acquiring a local upgrade instruction for the pseudo-color palette files, receiving uploaded and updated pseudo-color palette files based on the local upgrade instruction and adding the updated pseudo-color palette files into the pseudo-color palette library to implement upgrading or replacing the original pseudo-color palette files with the updated pseudo-color palette files to implement upgrading; and/or

acquiring an online upgrade instruction for the pseudo-color palette files, acquiring, from a cloud, updated pseudo-color palette files based on the online upgrade instruction and adding the updated pseudo-color palette files into the pseudo-color palette library to implement upgrading or replacing the original pseudo-color palette files with the updated pseudo-color palette files to implement upgrading.

9. The pseudo-color implementation method according to Claim 6, wherein the step of determining, according to the number and arrangement of the to-be-selected thumbnail windows to be displayed currently, the coordinate mapping relationship corresponding to the positions of the to-be-selected thumbnail windows in the pseudo-color selection interface based on an OpenGL rendering principle comprises:
determining, according to the number and arrangement of the to-be-selected thumbnail windows to be displayed currently, a coordinate scaling factor and a coordinate translation quantity respectively corresponding to the positions of the to-be-selected thumbnail windows in the pseudo-color selection interface.

10. The pseudo-color implementation method according to Claim 9, wherein the step of determining, according to the number and arrangement of the to-be-selected thumbnail windows to be displayed currently, a coordinate scaling factor and a coordinate translation quantity respectively corresponding to the positions of the to-be-selected thumbnail windows in the pseudo-color selection interface comprises:

if the arrangement of the to-be-selected thumbnail windows is horizontal, determining, according to the number of the to-be-selected thumbnail windows, an x-coordinate scaling factor and an x-coordinate translation quantity respectively corresponding to the positions of the to-be-selected thumbnail windows in the pseudo-color selection interface; or

if the arrangement of the to-be-selected thumbnail windows is vertical, determining, according to the number of the to-be-selected thumbnail windows, a y-coordinate scaling factor and a y-coordinate translation quantity respectively corresponding to the positions of the to-be-selected thumbnail windows in the pseudo-color selection interface; or

if the arrangement of the to-be-selected thumbnail windows is gridded, determining, according to the number of rows and the number of columns of the to-be-selected thumbnail windows, an x-coordinate scaling factor, a y-coordinate scaling factor, an x-coordinate translation quantity and a y-coordinate translation quantity, which respectively correspond to the positions of the to-be-selected thumbnail windows in the pseudo-color selection interface.

11. The pseudo-color implementation method according to Claim 9, wherein the step of respectively displaying the real-time image data in the to-be-selected thumbnail windows according to the coordinate mapping relationship and respectively presenting corresponding pseudo-color effects on the real-time image data in the to-be-selected thumbnail windows according to the pseudo-color palette attributes comprises:

calculating, according to the coordinate scaling factor and the coordinate translation quantity corresponding to the to-be-selected thumbnail windows, position coordinates of pixels in the to-be-selected thumbnail windows by coordinate transformation;

determining, based on the image data to be displayed currently, image data corresponding to the position coordinates of the pixels as pixel data by coordinate transformation; and

respectively performing, according to the pseudo-color palette attributes corresponding to the to-be-selected thumbnail windows, image processing on the image data of the pixels in the to-be-selected thumbnail windows by means of corresponding pseudo-color palettes to obtain a real-time pseudo-color result for presenting the corresponding pseudo-color effects on the real-time image data in the to-be-selected thumbnail windows.

12. The pseudo-color implementation method according to Claim 1, wherein the display setting information further comprises identity setting information set in identity regions corresponding to the to-be-selected thumbnail windows; the step of respectively displaying the real-time image data in the to-be-selected thumbnail windows according to the coordinate mapping relationship and respectively presenting corresponding pseudo-color effects on the real-time image data in the to-be-selected thumbnail windows according to the pseudo-color palette attributes comprises: respectively performing, according to the pseudo-color palette attributes corresponding to the to-be-selected thumbnail windows, image processing on image data of pixels in the to-be-selected thumbnail windows by means of corresponding pseudo-color palettes to obtain a real-time pseudo-color result for presenting the corresponding pseudo-color effects on the real-time image data in the to-be-selected thumbnail windows and displaying pseudo-color type names of the corresponding pseudo-color palettes in the identity regions corresponding to the to-be-selected thumbnail windows.

13. The pseudo-color implementation method according to Claim 1, wherein the step of acquiring display setting information of to-be-selected thumbnail windows in a pseudo-color selection interface comprises:

acquiring the display setting information of the to-be-selected thumbnail windows in the pseudo-color selection interface according to initial setup of the pseudo-color selection interface; and/or

acquiring the display setting information of the to-be-selected thumbnail windows in the pseudo-color selection interface based on a configuration operation for the number and arrangement of the to-be-selected thumbnail windows in the pseudo-color selection interface.

14. The pseudo-color implementation method according to Claim 1, further comprising:

acquiring, according to a switching operation for the to-be-selected thumbnail windows in the pseudo-color selection interface, a switching instruction corresponding to the current switching operation;

selecting, according to the switching instruction, target pseudo-color palette attributes corresponding to the to-be-selected thumbnail windows with a pseudo-color palette switching requirement from currently optional pseudo-color palette attributes; and

performing image processing on the image data in the to-be-selected thumbnail windows by means of the target pseudo-color palette attributes to obtain a real-time pseudo-color result for presenting corresponding pseudo-color effects on the real-time image data in the to-be-selected thumbnail windows obtained after switching.

15. The pseudo-color implementation method according to Claim 14, wherein the current switching operation is an operation for sliding m to-be-selected thumbnail windows in a specified direction, wherein m is less than or equal to the number of the optional pseudo-color palettes, and the number of the to-be-selected thumbnail windows in the pseudo-color selection interface is n; the step of selecting, according to the switching instruction, target pseudo-color palette attributes corresponding to the to-be-selected thumbnail windows with a pseudo-color palette switching requirement from currently optional pseudo-color palette attributes comprises:

selecting m pseudo-color palette attributes from the currently optional pseudo-color palette attributes according to the switching instruction corresponding to the current switching operation; and

if m is greater than or equal to n, sequentially replacing the target pseudo-color palette attributes corresponding to the to-be-selected thumbnail windows in the pseudo-color selection interface with the m pseudo-color palette attributes; or

if m is less than n, sequentially replacing the target pseudo-color palette attributes corresponding to the to-be-selected thumbnail windows in the pseudo-color selection interface with the pseudo-color palette attributes, corresponding to (n-m) to-be-selected thumbnail windows reserved in the current pseudo-color selection interface after the sliding operation, along with the m pseudo-color palette attributes.

16. The pseudo-color implementation method according to Claim 1, wherein the step of acquiring real-time image data comprises:

acquiring a preview instruction for currently captured image data, switching to the pseudo-color selection interface comprising a preview window and the to-be-selected thumbnail windows according to the preview instruction, and taking the currently captured image data as the real-time image data to be displayed; or acquiring a preview instruction for a currently browsed image, switching to the pseudo-color selection interface comprising a preview window and the to-be-selected thumbnail windows according to the preview instruction, and taking the currently browsed image as the real-time image data to be displayed; or displaying, in a preview mode, the pseudo-color selection interface comprising a preview window and the to-be-selected thumbnail windows, acquiring a selection instruction for uploading target image data, and taking the target image data as the real-time image data to be displayed according to the selection instruction.

17. An infrared thermal imaging device, comprising a processor, a memory and an image sensor, wherein: the image sensor is configured to acquire real-time image data and send the real-time image data to the processor, and the image sensor comprises an infrared sensor; and the memory stores a computer program, and the computer program, when executed by the processor, implements the pseudo-color implementation method according to any one of Claims 1-16.

18. The infrared thermal imaging device according to Claim 17, wherein the processor comprises an image processor, and the image processor is configured to perform parallel calculation on the coordinate mapping relationship of the to-be-selected thumbnail windows.

19. The infrared thermal imaging device according to Claim 18, wherein the real-time image data is infrared video data, captured in real time, of a target scenario.

20. A computer-readable storage medium, storing a computer program, wherein the computer program, when executed by a processor, implements the pseudo-color implementation method according to any one of Claims 1-16.

FIG. 1

FIG. 2

acquiring display setting information of to-be-selected thumbnail windows in a pseudo-color selection interface, wherein the display setting information includes the number and arrangement of the to-be-selected thumbnail windows — S101

determining, according to the display setting information, a coordinate mapping relationship and pseudo-color palette attributes, which correspond to positions of the to-be-selected thumbnail windows in the pseudo-color selection interface — S103

acquiring real-time image data — S105

respectively displaying the real-time image data in the to-be-selected thumbnail windows according to the coordinate mapping relationship, and respectively presenting corresponding pseudo-color effects on the real-time image data in the to-be-selected thumbnail windows according to the pseudo-color palette attributes — S107

## FIG. 3

(a)　　　　　　(b)

## FIG. 4

FIG. 5

FIG. 6

| | | | |
|---|---|---|---|
| real time scene thumbnail | | | |
| real time scene thumbnail | | | |
| real time scene thumbnail | | | |
| real time scene thumbnail | | | |
| real time scene thumbnail | | | |

vertical

real-time scene image

| real time scene thumbnail | real time scene thumbnail | real time scene thumbnail |
|---|---|---|
| real time scene thumbnail | real time scene thumbnail | real time scene thumbnail |
| real time scene thumbnail | real time scene thumbnail | real time scene thumbnail |

grid

| real time scene thumbnail | real time scene thumbnail | real time scene thumbnail | real time scene thumbnail | real time scene thumbnail |
|---|---|---|---|---|

horizontal

# FIG. 7

the number and arrangement of to-be-selected thumbnail windows in a pseudo-color selection interface are set — S11

pseudo-color palette attributes corresponding to the to-be-selected thumbnail windows are determined — S12

a target pseudo-color palette attribute corresponding to a preview window is determined according to a selected to-be-selected thumbnail window — S13

a coordinate mapping relationship corresponding to the positions of the to-be-selected thumbnail windows in the pseudo-color selection interface is determined based on an OpenGL rendering principle, acquired real-time image data are associated with pixels in the to-be-selected thumbnail windows by coordinate transformation, corresponding pseudo-color palettes are called respectively according to the pseudo-color palette attributes corresponding to the to-be-selected thumbnail windows to perform pseudo-color processing, and pseudo-color thumbnails of pseudo-color effects corresponding to the real-time image data are presented in the to-be-selected thumbnail windows respectively — S14

the preview window acquires real-time image data and presents a preview image of a corresponding pseudo-color effect of the real-time image data according to the target pseudo-color palette attribute — S15

FIG. 8

EP 4 712 498 A1

infrared thermal imaging device

setting module ~ 91

rendering module ~ 92

switching module ~ 93

FIG. 9

processor ~ 111

memory ~ 112

FIG. 10

27

## INTERNATIONAL SEARCH REPORT

| International application No. |
| --- |
| **PCT/CN2023/135093** |

| A. | CLASSIFICATION OF SUBJECT MATTER |
| --- | --- |

H04N23/63(2023.01)i;  H04N23/62(2023.01)i;  H04N23/23(2023.01)i;  H04N23/84(2023.01)i

According to International Patent Classification (IPC) or to both national classification and IPC

| B. | FIELDS SEARCHED |
| --- | --- |

Minimum documentation searched (classification system followed by classification symbols)

    IPC: H04N

Documentation searched other than minimum documentation to the extent that such documents are included in the fields searched

Electronic data base consulted during the international search (name of data base and, where practicable, search terms used)

    CNTXT, CJFD, ENTXTC, ENTXT: 伪彩, 滤镜, 增强, 效果, 红外, 预览, 缩略, 选择, 用户, 多, pseudo, color, filter?, augment+, effect+, infrared, preview+, thumbnail, select+, user

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116805981 A (IRAY TECHNOLOGY CO., LTD.) 26 September 2023 (2023-09-26) entire document | 1-20 |
| Y | CN 107864335 A (GUANGDONG OPPO MOBILE TELECOMMUNICATIONS CO., LTD.) 30 March 2018 (2018-03-30) description, paragraphs 43-130, and figure 4 | 1-7, 9-20 |
| Y | CN 106548467 A (GUANGZHOU SAT INFRARED TECHNOLOGY CO., LTD.) 29 March 2017 (2017-03-29) description, paragraphs 51-101 | 1-7, 9-20 |
| A | CN 101912274 A (SHENZHEN EDAN INSTRUMENTS INC.) 15 December 2010 (2010-12-15) entire document | 1-20 |
| A | CN 116309013 A (WUXI INFISENSE TECHNOLOGY CO., LTD.) 23 June 2023 (2023-06-23) entire document | 1-20 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 March 2024** | **11 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 712 498 A1**

**INTERNATIONAL SEARCH REPORT**

International application No.

**PCT/CN2023/135093**

**C.    DOCUMENTS CONSIDERED TO BE RELEVANT**

| Category* | Citation of document, with indication, where appropriate, of the relevant passages | Relevant to claim No. |
|---|---|---|
| A | CN 115272178 A (GUANGZHOU ZICHUAN ELECTRONIC TECHNOLOGY CO., LTD.) 01 November 2022 (2022-11-01) entire document | 1-20 |
| A | CN 113160095 A (IRAY TECHNOLOGY CO., LTD.) 23 July 2021 (2021-07-23) entire document | 1-20 |
| A | CN 114596371 A (JIANGSU SINOGRAM MEDICAL TECHNOLOGY CO., LTD.) 07 June 2022 (2022-06-07) entire document | 1-20 |
| A | CN 113014803 A (VIVO COMMUNICATION TECHNOLOGY CO., LTD.) 22 June 2021 (2021-06-22) entire document | 1-20 |
| A | CN 113194255 A (NANJING VIVO SOFTWARE TECHNOLOGY CO., LTD.) 30 July 2021 (2021-07-30) entire document | 1-20 |

Form PCT/ISA/210 (second sheet) (July 2022)

**INTERNATIONAL SEARCH REPORT**
Information on patent family members

| International application No. |
| --- |
| **PCT/CN2023/135093** |

| Patent document cited in search report | | | Publication date (day/month/year) | Patent family member(s) | | | Publication date (day/month/year) |
| --- | --- | --- | --- | --- | --- | --- | --- |
| CN | 116805981 | A | 26 September 2023 | None | | | |
| CN | 107864335 | A | 30 March 2018 | None | | | |
| CN | 106548467 | A | 29 March 2017 | EP | 3534326 | A1 | 04 September 2019 |
| | | | | EP | 3534326 | A4 | 06 May 2020 |
| | | | | WO | 2018076732 | A1 | 03 May 2018 |
| CN | 101912274 | A | 15 December 2010 | None | | | |
| CN | 116309013 | A | 23 June 2023 | None | | | |
| CN | 115272178 | A | 01 November 2022 | None | | | |
| CN | 113160095 | A | 23 July 2021 | None | | | |
| CN | 114596371 | A | 07 June 2022 | None | | | |
| CN | 113014803 | A | 22 June 2021 | None | | | |
| CN | 113194255 | A | 30 July 2021 | None | | | |

Form PCT/ISA/210 (patent family annex) (July 2022)